# FASCICULE DE BREVET EUROPEEN

(11) **EP 3 584 127 B1**
(45) Date de publication et mention de la délivrance du brevet: **24.03.2021**
(21) Numéro de dépôt: 19180407.9
(22) Date de dépôt: 14.06.2019
(51) Int. Cl.: B60S 1/52, B60S 1/56, G02B 27/00, G01S 17/00

(54) **MODULE DE NETTOYAGE D'UN DISPOSITIF DE PROTECTION D'UN ÉLÉMENT OPTIQUE ET SYSTÈME D'ASSISTANCE À LA CONDUITE ASSOCIÉ**
REINIGUNGSMODUL EINER SCHUTZVORRICHTUNG EINES OPTISCHEN ELEMENTS, UND ENTSPRECHENDES LENKASSISTENZSYSTEM
MODULE FOR CLEANING A DEVICE FOR PROTECTING AN OPTICAL ELEMENT AND ASSOCIATED DRIVING-ASSISTANCE SYSTEM

(30) Priorité: 19.06.2018 FR 1855404
(43) Date de publication de la demande: 25.12.2019
(73) Titulaire: Valeo Systèmes d'Essuyage, 78322 Le Mesnil Saint Denis (FR)
(72) Inventeur: IZABEL, Vincent, 78322 LE MESNIL SAINT DENIS (FR); JARASSON, Jean-Michel, 78322 LE MESNIL SAINT DENIS (FR); CAILLOT, Gérald, 78322 LE MESNIL SAINT DENIS (FR)
(74) Mandataire: Valeo Visibility

(56) Documents cités:
- WO-A1-2013/045396
- DE-A1-102015 218 682
- US-A1- 2016 244 028
- US-A1- 2017 151 933

## Description

La présente invention se rapporte au domaine de l'aide à la conduite et notamment aux systèmes d'assistance à la conduite implantés sur certains véhicules automobiles.

Un système d'assistance à la conduite peut comporter au moins un élément optique. L'invention concerne plus particulièrement un module de nettoyage d'un dispositif de protection d'un élément optique d'un tel système d'assistance à la conduite.

L'élément optique d'un système d'assistance à la conduite est configuré pour émettre et/ou capturer des signaux optiques afin de déterminer des scènes de route ou encore un environnement autour du véhicule automobile. Dans le cas d'éléments optiques capturant des signaux optiques, de tels éléments optiques peuvent par exemple être des caméras comprenant au moins une lentille. Par ailleurs, dans le cas d'éléments émettant et capturant des signaux optiques, de tels éléments optiques peuvent utiliser une technologie Lidar (correspondant à l'acronyme anglais de Light Détection And Ranging ou détection et estimation de la distance par la lumière en français).

Actuellement, de nombreux éléments optiques équipent un grand nombre de véhicules automobiles afin de faciliter la mise au stationnement de ce dernier, ou encore pour offrir à ce véhicule automobile une certaine autonomie. Dans ce second cas, on peut citer de façon non limitative les détecteurs de franchissement de ligne, les systèmes de freinage automatique d'urgence, les régulateurs adaptatifs de vitesse, les dispositifs de détection d'angle mort, ou encore certains équipements tels que la technologie Lidar pour les véhicules, pouvant par exemple être des véhicules autonomes.

De tels éléments optiques sont généralement installés à l'extérieur du véhicule automobile, comme par exemple au niveau du toit, des ailes avant ou arrière, des rétroviseurs, ou encore des montants latéraux du pare-brise du véhicule automobile. Ainsi, ces éléments optiques sont fortement exposés aux salissures organiques ou minérales, comme par exemple des poussières ou des insectes, et également aux intempéries qui peuvent laisser des traces d'eau par exemple dans le champ de vision et/ou d'émission de l'élément optique ce qui peut nuire à sa bonne opérabilité et donc à celle du système d'assistance à la conduite.

De plus en plus, les systèmes d'assistance à la conduite présentent une surface de révolution afin de pouvoir capturer des scènes de route tout autour du véhicule automobile par exemple, et présentent généralement un rayon de courbure assez faible, c'est-à-dire une courbure forte, pour des raisons d'aérodynamisme par exemple, ou encore pour réduire l'encombrement de ces systèmes d'assistance à la conduite, notamment des éléments ou équipements optiques pour la détection. On peut citer en particulier les systèmes d'assistance à la conduite utilisant la technologie Lidar.

On connaît par exemple du document US 2016/0244028, un module de nettoyage d'un dispositif de protection entourant un élément optique d'un système d'assistance à la conduite et présentant un axe de révolution. Le module de nettoyage met en œuvre un balai et des conduites d'amenée de liquide de nettoyage afin de projeter du liquide de nettoyage sur le dispositif de protection. Ces éléments sont destinés à se déplacer en rotation autour de l'axe de révolution du dispositif de protection afin de permettre son nettoyage sous l'effet d'un moteur. Cependant, les temps nécessaires entre la projection de liquide de nettoyage et le balayage de la surface du dispositif de protection présentant du liquide de nettoyage peuvent être longs, ce qui entraîne une mauvaise opérabilité du système d'assistance à la conduite du fait de la présence du liquide de nettoyage dans le champ de vision ou d'émission de l'élément optique logé à l'intérieur du dispositif de protection.

La présente invention a pour objectif de pallier au moins partiellement les inconvénients de l'art antérieur exposés ci-dessus en proposant un module de nettoyage d'un dispositif de protection d'un élément optique présentant une surface de révolution, ledit module de nettoyage garantissant une bonne opérabilité d'un système d'assistance à la conduite au cours d'un procédé de nettoyage du dispositif de protection.

Un autre objectif de la présente invention, différent de l'objectif précédent, est de proposer un système d'assistance à la conduite dont le nettoyage est efficace et simple à mettre en œuvre lorsque le véhicule automobile est en mouvement ou à l'arrêt.

A cet effet, pour atteindre au moins partiellement au moins un des objectifs précités, la présente invention a pour objet un module de nettoyage d'un dispositif de protection d'un élément optique, notamment destiné à équiper un véhicule automobile. Le dispositif de protection présente une surface de révolution autour d'un axe de révolution.

Le module de nettoyage comprend un balai configuré pour s'étendre selon une première direction générale parallèle à l'axe de révolution du dispositif de protection. Le balai comporte une lame d'essuyage configurée pour s'étendre depuis le balai vers la surface de révolution selon une deuxième direction générale perpendiculaire à la première direction générale d'extension du balai. La lame d'essuyage est configurée pour balayer la surface de révolution du dispositif de protection lors d'un mouvement relatif de rotation entre le balai et le dispositif de protection autour de l'axe de révolution.

Le module de nettoyage comporte en outre une conduite d'amenée de liquide de nettoyage fixée sur le balai. La conduite d'amenée de liquide de nettoyage présente au moins une ouverture pour la projection de liquide de nettoyage. L'ouverture est disposée de manière à définir une direction de projection du liquide de nettoyage formant un angle compris entre 0° et 15° avec la deuxième direction générale.

La présence de la conduite d'amenée de liquide de nettoyage fixée sur le balai permet de projeter du liquide de nettoyage au plus proche de la lame d'essuyage de manière à permettre un essuyage rapide de ce dernier lors du déplacement relatif en rotation du dispositif de protection par rapport au balai autour de l'axe de révolution du dispositif de protection. Ainsi, l'opérabilité du système d'assistance à la conduite est conservée au cours du nettoyage du dispositif de protection. Par ailleurs, la possibilité de relier la conduite d'amenée de liquide de nettoyage permet de limiter la largeur du module de nettoyage et donc la zone du champ de vision de l'élément optique obstruée par ce module de nettoyage sur le dispositif de protection au cours du nettoyage de ce dernier.

Le module de nettoyage selon l'invention peut comprendre en outre une ou plusieurs des caractéristiques suivantes prises seules ou en combinaison.

Selon un mode de réalisation particulier, la conduite d'amenée de liquide de nettoyage présente une pluralité d'ouvertures disposées selon une rangée.

Selon une variante de ce mode de réalisation particulier, la rangée formée par les ouvertures est disposée parallèlement à la première direction d'extension générale du balai.

Selon un aspect, la conduite d'amenée de liquide de nettoyage est fixée sur le balai à l'opposé de la lame d'essuyage.

La lame d'essuyage est disposée au plus près de la surface de révolution du dispositif de protection.

La lame d'essuyage peut présenter au moins un talon disposé à l'opposé de l'extrémité de la lame d'essuyage configurée pour être disposée au contact de la surface de révolution du dispositif de protection.

Le balai peut présenter en outre au moins une vertèbre de rigidification s'étendant selon la première direction générale, ladite vertèbre de rigidification étant disposée sur le balai à l'opposé de la lame d'essuyage. Cette vertèbre de rigidification est configurée pour maintenir la lame d'essuyage au contact de la surface de révolution du dispositif de protection.

La vertèbre de rigidification peut servir de support à la conduite d'amenée de liquide de nettoyage.

Selon un mode de réalisation particulier, le balai peut présenter deux vertèbres de rigidification disposées de part et d'autre de la lame d'essuyage.

De manière alternative, le balai peut présenter une seule vertèbre de rigidification.

La vertèbre de rigidification peut présenter une coupe transversale en forme de C ou une forme de griffe de manière à prendre en sandwich au moins une partie du talon de la lame d'essuyage.

La vertèbre de rigidification est par exemple sous forme de lame et peut être disposée sur le talon.

La vertèbre de rigidification peut s'étendre sur l'ensemble ou sur une partie de la longueur du balai.

Le balai peut comprendre en outre au moins un élément de fixation dudit balai à un bras.

Selon un premier aspect, l'élément de fixation est disposé sensiblement au centre du balai.

Selon un autre aspect, l'élément de fixation est disposé au niveau d'une extrémité du balai.

La conduite d'amenée de liquide de nettoyage comporte au moins deux moyens d'encliquetage configurés pour relier ladite conduite d'amenée de liquide de nettoyage au balai.

Selon un mode de réalisation particulier, les au moins deux moyens d'encliquetage sont rapportés à la conduite d'amenée de liquide de nettoyage.

Selon un autre mode de réalisation particulier, les moyens d'encliquetage viennent de matière avec la conduite d'amenée de liquide de nettoyage.

Le module de nettoyage comprend en outre un premier et un deuxième capots d'extrémité disposés aux extrémités longitudinales du balai.

Les premier et deuxième capots d'extrémité coopèrent avec le balai à l'opposé de la lame d'essuyage.

Les premier et deuxième capots d'extrémité peuvent coopérer également avec l'au moins une vertèbre de rigidification.

Selon un premier aspect, la conduite d'amenée de liquide de nettoyage présente une arrivée pour l'alimentation de la conduite d'amenée de liquide de nettoyage en liquide de nettoyage disposée à une première extrémité de la conduite d'amenée de liquide de nettoyage.

Selon un mode de réalisation particulier de ce premier aspect, l'arrivée de la conduite d'amenée de liquide de nettoyage coopère avec le premier capot d'extrémité, ledit premier capot d'extrémité étant configuré pour assurer la connexion entre l'arrivée de la conduite d'amenée de liquide de nettoyage et une conduite principale destinée à alimenter la conduite d'amenée de liquide de nettoyage en liquide de nettoyage.

Selon une première variante, le deuxième capot d'extrémité peut coopérer avec une deuxième extrémité, opposée à la première extrémité, de la conduite d'amenée de liquide de nettoyage.

Selon cette première variante, la deuxième extrémité de la conduite d'amenée de liquide de nettoyage présente une ouverture configurée pour coopérer avec un pion porté par le deuxième capot d' extrémité.

Selon une autre variante, la deuxième extrémité de la conduite d'amenée de liquide de nettoyage peut être pleine.

Selon une troisième variante, le deuxième capot d'extrémité peut présenter un dispositif d'étanchéité configuré pour coopérer avec la deuxième extrémité de la conduite d'amenée de liquide de nettoyage afin de prévenir des fuites de liquide de nettoyage contenu dans cette conduite d'amenée de liquide de nettoyage.

Selon un deuxième aspect, la conduite d'amenée de liquide de nettoyage présente une arrivée pour l'alimentation de la conduite d'amenée de liquide de nettoyage en liquide de nettoyage, ladite arrivée étant disposée de manière décalée par rapport aux première et deuxième extrémités de la conduite d'amenée de liquide de nettoyage.

Selon un mode de réalisation particulier de ce deuxième aspect, l'arrivée de la conduite d'amenée de liquide de nettoyage est disposée dans un plan défini par la deuxième direction générale de la lame d'essuyage.

Selon une première variante, les première et deuxième extrémités de la conduite d'amenée de liquide de nettoyage peuvent être pleines.

Selon une deuxième variante, les première et deuxième extrémités de la conduite d'amenée de liquide de nettoyage présentent chacune une ouverture.

Selon ces première et deuxième variantes, les premier et deuxième capots d'extrémités sont reliés respectivement aux première et deuxième extrémités de la conduite d'amenée de liquide de nettoyage.

Selon cette deuxième variante, les premier et deuxième capots d'extrémité peuvent présenter chacun un dispositif d'étanchéité configuré pour coopérer avec les ouvertures des première et deuxième extrémités de la conduite d'amenée de liquide de nettoyage afin de prévenir toute fuite de liquide de nettoyage contenu dans la conduite d'amenée de liquide de nettoyage.

Selon un mode de réalisation particulier, l'arrivée de la conduite d'amenée de liquide de nettoyage peut être reliée directement à une conduite principale configurée pour alimenter la conduite d'amenée de liquide de nettoyage en liquide de nettoyage.

Selon un autre mode de réalisation particulier, le module de nettoyage présente au moins un premier et un deuxième moyens d'encliquetage disposés aux extrémités de la conduite d'amenée de liquide de nettoyage de manière à assurer sa coopération avec le balai. Le premier moyen d'encliquetage est disposé au niveau de l'arrivée de la conduite d'amenée de liquide de nettoyage et est configuré pour assurer la connexion entre l'arrivée et une conduite principale destinée à alimenter la conduite d'amenée de liquide de nettoyage en liquide de nettoyage.

Le deuxième moyen d'encliquetage peut être disposé au niveau de la deuxième extrémité de la conduite d'amenée de liquide de nettoyage et présenter un dispositif d'étanchéité configuré pour obturer l'ouverture de la deuxième extrémité de la conduite d'amenée de liquide de nettoyage afin de prévenir des fuites de liquide de nettoyage contenu dans la conduite d'amenée de liquide de nettoyage.

Le module de nettoyage peut comprendre en outre des moyens d'encliquetage additionnels, lesdits moyens d'encliquetage additionnels étant disposés sensiblement au centre de la conduite d'amenée de liquide de nettoyage.

Selon un aspect, le balai peut être chauffant.

Selon un autre aspect, la conduite d'amenée de liquide de nettoyage peut être chauffante de manière à chauffer le liquide de nettoyage avant sa projection sur la surface de révolution du dispositif de protection.

La présente invention a également pour objet un système d'assistance à la conduite, notamment pour véhicule automobile, comprenant au moins un élément optique, et au moins un dispositif de protection dudit au moins un élément optique présentant une surface de révolution autour d'un axe de révolution, le système d'assistance à la conduite comporte en outre :
- un module de nettoyage dudit au moins un dispositif de protection tel que défini précédemment, le module de nettoyage présentant un balai configuré pour s'étendre selon une première direction générale parallèle à l'axe de révolution du dispositif de protection, et
- au moins un actionneur configuré pour générer le mouvement relatif de rotation entre le dispositif de protection et le balai du module de nettoyage autour de l'axe de révolution du dispositif de protection.

Le système d'assistance à la conduite peut comporter en outre une ou plusieurs des caractéristiques suivantes prises seules ou en combinaison.

Le dispositif de protection peut être disposé au moins en partie à l'extérieur d'un élément de carrosserie du véhicule automobile.

Selon un aspect, le dispositif de protection peut faire saillie par rapport à l'élément de carrosserie du véhicule automobile.

Selon un mode de réalisation particulier, le dispositif de protection présente une forme cylindrique.

Selon un aspect, le dispositif de protection fait partie de l'élément optique.

Selon une alternative, le dispositif de protection est un élément distinct de l'élément optique et la surface de révolution est configurée pour être agencée autour dudit au moins un élément optique.

L'élément optique peut être choisi parmi un capteur optique, ou un capteur optique couplé à un émetteur optique.

Selon un mode de réalisation particulier, le système d'assistance à la conduite comporte une technologie Lidar correspondant à l'émission d'un faisceau laser et à la détection de l'écho reçu afin de déterminer la distance séparant le véhicule automobile d'un autre objet.

Selon un premier mode de réalisation particulier, le dispositif de protection est configuré pour être monté fixe sur le véhicule automobile et le balai est configuré pour être monté mobile par rapport au dispositif de protection.

Selon un deuxième mode de réalisation particulier, le balai est configuré pour être monté fixe sur le véhicule automobile et le dispositif de protection est configuré pour être monté mobile par rapport au balai.

L'au moins un actionneur peut être choisi parmi les actionneurs : pneumatiques, électriques, ou encore magnétiques.

Selon un aspect, l'au moins un actionneur est configuré pour déplacer le balai relativement au dispositif de protection à une vitesse comprise entre 5 et 30 tours/minute.

Le balai peut s'étendre sensiblement sur l'ensemble d'une longueur du dispositif de protection.

Le système d'assistance à la conduite peut comprendre en outre une unité électronique de contrôle configurée pour commander le nettoyage du dispositif de protection par le module de nettoyage.

Selon un aspect, l'unité électronique de contrôle peut être configurée pour déclencher un procédé de nettoyage du dispositif de protection, ledit procédé de nettoyage comprenant :
- une étape d'alimentation de la conduite d'amenée de liquide de nettoyage en liquide de nettoyage afin de mettre en œuvre une étape de projection de liquide de nettoyage sur la surface de révolution du dispositif de protection, et
- une étape de balayage de la surface de révolution lors d'un mouvement relatif entre le balai du module de nettoyage et le dispositif de protection.

Selon une première variante, l'unité électronique de contrôle peut être configurée pour déclencher le procédé de nettoyage du dispositif de protection au bout d'une durée prédéterminée d'utilisation du système d'assistance à la conduite.

Selon une autre variante, l'unité électronique de contrôle peut être configurée pour déclencher le procédé de nettoyage du dispositif de protection lorsque la présence de salissures sur le dispositif de protection est détectée par l'élément optique.

L'unité électronique de contrôle peut être configurée pour piloter l'arrivée de la conduite d'amenée de liquide de nettoyage afin de commander le débit du liquide de nettoyage à l'intérieur de la conduite d'amenée de liquide de nettoyage lors de l'étape d'alimentation de la conduite d'amenée de liquide de nettoyage.

Selon un mode de réalisation particulier, la conduite d'amenée de liquide de nettoyage est disposée sur le balai de manière à projeter du liquide de nettoyage sur la surface de révolution préalablement au passage de la lame d'essuyage lors de l'étape de balayage.

Selon un aspect, le procédé de nettoyage du dispositif de protection peut être déclenché lorsque le véhicule automobile est à l'arrêt.

Selon un autre aspect, le procédé de nettoyage du dispositif de protection peut être déclenché lorsque le véhicule automobile est en mouvement.

De manière alternative, le procédé de nettoyage du dispositif de protection peut comprendre une étape d'arrêt de la projection de liquide de nettoyage pour permettre la détection de salissures éventuellement encore présentes sur le dispositif de protection.

Selon une variante, le procédé de nettoyage du dispositif de protection peut comprendre une étape de pause dans laquelle le mouvement relatif de rotation du balai par rapport au dispositif de protection et la projection de liquide de nettoyage sont stoppés afin de permettre la détection de la présence de salissures éventuelles sur le dispositif de protection.

L'unité électronique de contrôle peut être configurée de manière à ce que le procédé de nettoyage du dispositif de protection présente une durée inférieure à 2 minutes.

D'autre caractéristiques et avantages de la présente demande de brevet apparaîtront plus clairement à la lecture de la description suivante, donnée à titre illustratif et non limitatif et des dessins annexés dans lesquels :
- la figure 1 est une représentation schématique en perspective d'un système d'assistance à la conduite présentant un module de nettoyage,
- la figure 2A est une représentation schématique en perspective d'un module de nettoyage selon un mode de réalisation,
- la figure 2B est une représentation de face en coupe transversale du module de nettoyage de la figure 2A selon une première variante,
- la figure 2C est une représentation schématique de face en coupe transversale du module de nettoyage de la figure 2A selon une deuxième variante,
- la figure 3 est une représentation schématique en perspective d'un module de nettoyage selon un autre mode de réalisation,
- la figure 4A est une représentation schématique en vue éclatée d'un module de nettoyage selon un mode de réalisation particulier,
- la figure 4B est une représentation schématique assemblée du module de nettoyage de la figure 4A,
- la figure 4C est une représentation schématique en coupe transversale du module de nettoyage de la figure 4B,
- la figure 4D est une représentation schématique en coupe transversale d'un module de nettoyage selon une variante de la figure 4C,
- la figure 4E est une représentation schématique en coupe transversale d'un module de nettoyage selon une autre variante de la figure 4C,
- la figure 5A est une représentation schématique en vue éclatée d'un module de nettoyage selon un autre mode de réalisation particulier,
- la figure 5B est une représentation schématique assemblée du module de nettoyage de la figure 5A,
- la figure 5C est une représentation schématique en coupe transversale du module de nettoyage de la figure 5B, et
- la figure 6 est une représentation schématique d'un organigramme présentant différentes étapes d'un procédé de nettoyage d'un dispositif de protection.

Les éléments identiques sur les différentes figures portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent uniquement à un seul mode de réalisation. De simples caractéristiques de différents modes de réalisation peuvent également être combinées et/ou interchangées pour fournir d'autres réalisations.

Dans la description suivante, il est fait référence à une première et à une deuxième directions générales, à un premier et un deuxième capots d'extrémité, à une première et une deuxième extrémités de la conduite d'amenée de liquide de nettoyage, à un premier et un deuxième moyens d'encliquetage, à un premier et un deuxième moyens de coopération du premier moyen d'encliquetage, et à un premier et un deuxième éléments de coopération. Il s'agit d'un simple indexage pour différencier et dénommer des éléments proches mais non identiques. Cette indexation n'implique pas non plus un ordre dans le temps pour apprécier la disposition des différents éléments composant le système d'assistance à la conduite, ou encore composant le module de nettoyage.

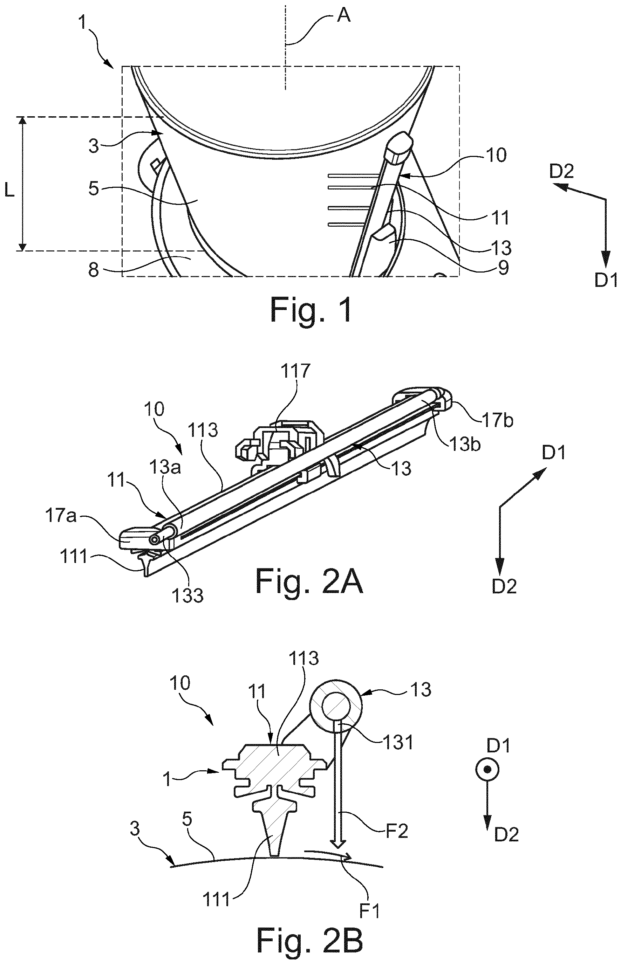

Dans la description suivante, on se réfère à une orientation définie par une première et une deuxième directions générales telles que représentées arbitrairement sur le dièdre D1, D2 représenté sur les figures 1 à 5C. L'orientation de ces directions est choisie selon l'orientation générale d'un module de nettoyage à l'état installé sur un système d'assistance à la conduite. Cependant, ceci n'est pas limitatif de l'orientation que peut prendre le module de nettoyage dans son application à un système d'assistance à la conduite.

### Système d'assistance à la conduite :

En référence à la figure 1, il est représenté partiellement un système d'assistance à la conduite 1, notamment pour véhicule automobile, comprenant au moins un élément optique, au moins un dispositif de protection 3, et un module de nettoyage 10 pour chaque dispositif de protection 3. D'autre part, le système d'assistance à la conduite 1 comporte au moins un actionneur 9. On peut prévoir un ou plusieurs actionneurs 9 pour chaque dispositif de protection 3 ou pour chaque module de nettoyage 10.

L'élément optique peut être choisi parmi un capteur optique, tel qu'une caméra configurée pour capturer et transmettre des scènes de route par exemple, ou un capteur optique couplé à un émetteur optique comme une technologie Lidar par exemple, correspondant à l'émission d'un faisceau laser et à la détection de l'écho reçu afin de déterminer la distance séparant le véhicule automobile d'un autre objet, ou encore une combinaison de ces éléments. L'élément optique est destiné à être logé dans un dispositif de protection 3 correspondant. Dans ce cas, le dispositif de protection 3 est un élément distinct de l'élément optique et rapporté à celui-ci. Selon une variante, le dispositif de protection 3 peut faire partie de l'élément optique.

De plus, le système d'assistance à la conduite 1 peut comporter plusieurs éléments optiques qui peuvent être logés dans un dispositif de protection 3 commun. Les éléments optiques peuvent être agencés de sorte que leurs champs de vision respectifs soient orientés selon différentes directions afin de capturer différentes scènes de route tout autour du véhicule automobile.

Ainsi, les éléments optiques peuvent présenter différents angles de vision selon le nombre et le type de composants de l'élément optique. De préférence, l'angle de vision de l'élément ou de chaque élément optique est compris de préférence entre 60° et 360°. Avec de tels éléments optiques, le système d'assistance à la conduite 1 peut équiper des véhicules autonomes par exemple.

Le dispositif de protection 3 présente une surface de révolution 5 autour d'un axe de révolution A. Cette surface de révolution 5 peut être configurée pour être agencée autour de l'élément optique afin de protéger ce dernier de dégradations qu'il pourrait être amené à subir, notamment du fait de projections d'éléments solides d'origines minérales ou organiques, tels que des gravillons ou encore des insectes. En variante, la surface de révolution 5 peut faire partie intégrante de l'élément optique.

La surface de révolution 5 est par exemple cylindrique. Selon ce mode de réalisation particulier, le dispositif de protection 3 présente une longueur L qui peut, par exemple, être comprise entre 50 mm et 350 mm, notamment entre 250 mm et 300 mm. D'autre part, le dispositif de protection 3 présente un diamètre, par exemple, compris entre 60 mm et 800 mm. Ainsi, le dispositif de protection 3 présente un faible rayon de courbure (ou encore une courbure forte).

D'autre part, le dispositif de protection 3 est destiné à être disposé au moins en partie à l'extérieur d'un élément de carrosserie du véhicule automobile. Plus particulièrement, le dispositif de protection 3 peut faire saillie par rapport à l'élément de carrosserie du véhicule automobile. Ainsi l'élément optique disposé à l'intérieur du dispositif de protection 3 peut capturer des scènes de route disposées tout autour du véhicule automobile sans perturbation des scènes de route qui peut par exemple être due aux montants latéraux du véhicule automobile.

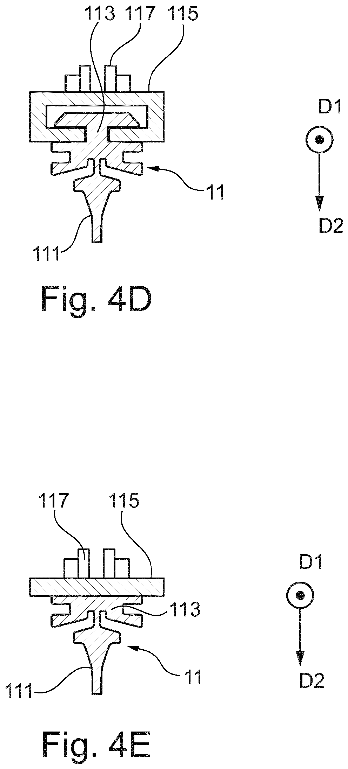

Différents exemples de réalisation du module de nettoyage 10 sont représentés sur les figures 2A à 5C. Le module de nettoyage 10 comporte notamment un balai 11 et une conduite d'amenée de liquide de nettoyage 13 (non représentée sur les figures 4D et 4E) fixée sur le balai 11.

Le balai 11 s'étend selon une première direction générale D1. Le balai 11 s'étend longitudinalement. La première direction générale D1 est par exemple parallèle à l'axe de révolution A du dispositif de protection 3 comme cela est représenté en référence à la figure 1.

En référence aux figures 1 et 2A à 3, 4C à 4E et 5C, le balai 11 comporte une lame d'essuyage 111 configurée pour s'étendre depuis le balai 11 vers la surface de révolution 5 selon une deuxième direction générale D2 perpendiculaire à la première direction générale D1 d'extension du balai 11. La lame d'essuyage 111 est configurée pour balayer la surface de révolution 5 du dispositif de protection 3 lors d'un mouvement relatif de rotation entre le balai 11 et le dispositif de protection 3 autour de l'axe de révolution A. Un tel balai 11 avec une lame d'essuyage 111 présente une structure simple.

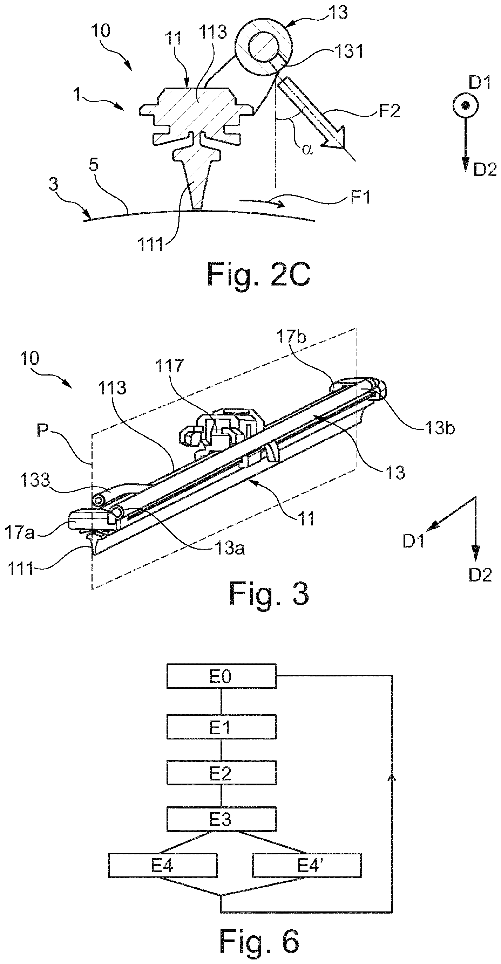

Le balai 11 s'étend sensiblement sur l'ensemble de la longueur L du dispositif de protection 3 (voir figure 1). Ainsi, la lame d'essuyage 111 (visible sur les figures 2B et 2C par exemple) peut balayer l'ensemble de la surface de révolution 5 afin de garantir la bonne opérabilité de l'au moins un élément optique. Selon une variante non représentée, le balai 11 peut s'étendre seulement sur une partie de la longueur L du dispositif de protection 3. Selon cette variante, le balai 11, et plus particulièrement la lame d'essuyage 111, s'étend de manière à pouvoir balayer au moins la surface de révolution 5 disposée dans le champ de vision de l'au moins un élément optique. Cette variante peut permettre de réduire la taille du balai 11 et donc de limiter les coûts du module de nettoyage 10.

Par ailleurs, le balai 11 peut être chauffant. Ceci permet notamment d'améliorer la flexibilité du balai 11 de manière à ce que la lame d'essuyage 111 suive la courbure de la surface de révolution 5 du dispositif de protection 3. En effet, la fonction chauffante permet d'améliorer le retournement de la lame d'essuyage 111, par exemple en cas de glace accumulée au niveau d'une charnière par temps froid, en permettant le dégel de cette glace.

Le balai 11 présente par exemple en outre au moins un talon 113 (visible sur les figures 2A à 5C) de la lame d'essuyage 111. Le talon 113 est disposé à l'opposé de l'extrémité de la lame d'essuyage 111 destinée à balayer la surface de révolution 5 du dispositif de protection 3.

Le balai 11 peut comprendre en outre un premier 17a et un deuxième 17b capots d'extrémité (voir figures 2A, 3 à 4B, 5A et 5B). Les capots d'extrémité 17a, 17b sont disposés aux extrémités longitudinales du balai 11. Ils coopèrent par exemple au moins avec le talon 113 du balai 11.

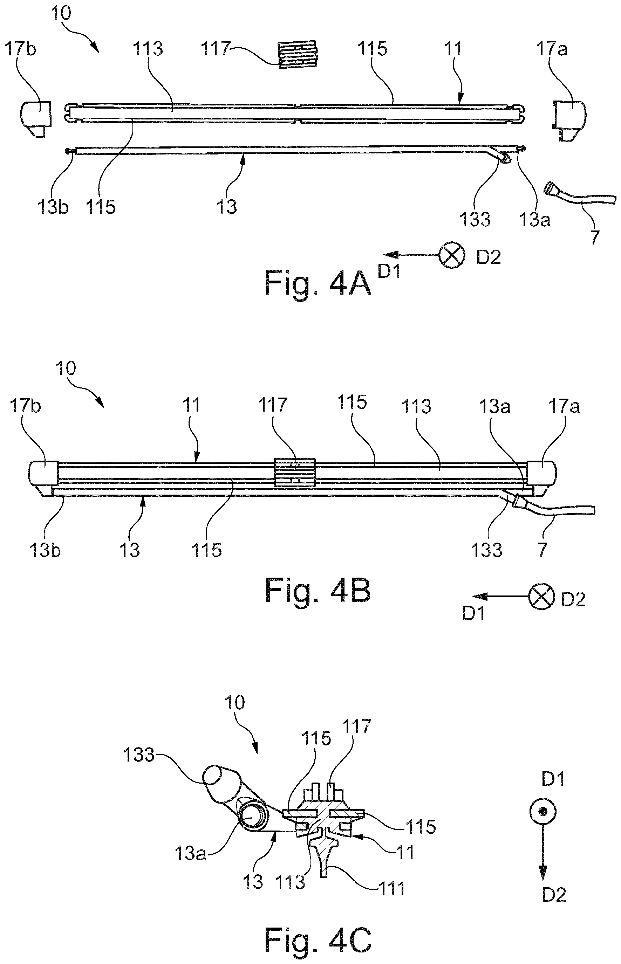

D'autre part, et de manière optionnelle, le balai 11 peut présenter au moins une vertèbre de rigidification 115 (visible sur les figures 4A à 5C) s'étendant selon la première direction générale D1. Une telle vertèbre de rigidification 115 peut également être dénommée spline en anglais. La vertèbre de rigidification 115 est disposée sur le balai 11 à l'opposé de la lame d'essuyage 111. Différentes variantes pour la disposition de la vertèbre de rigidification 115 sur le balai 11 sont décrites plus en détail ultérieurement.

De plus, le module de nettoyage 10 peut comprendre au moins un élément de fixation 117 pour la fixation du balai 11 à un bras (non représenté) de fixation sur le véhicule automobile. Selon le mode de réalisation particulier de la figure 2A, l'élément de fixation 117 est disposé sur le talon 113, sensiblement au centre du balai 11. Selon une alternative non représentée ici, l'élément de fixation 117 peut être disposé ailleurs, par exemple au niveau d'une extrémité du balai 11.

En référence aux figures 2A à 4C et 5A à 5C, la conduite d'amenée de liquide de nettoyage 13 peut par exemple être réalisée en caoutchouc, en plastique, ou encore en métal.

La conduite d'amenée de liquide de nettoyage 13 présente au moins une ouverture 131 (visible sur les figures 2B et 2C) pour la projection de liquide de nettoyage. L'au moins une ouverture 131 peut par exemple être réalisée par laser.

La conduite d'amenée de liquide de nettoyage 13 peut présenter une pluralité d'ouvertures 131 formant au moins une rangée. Selon cette variante, l'au moins une rangée formée par les ouvertures 131 peut être disposée parallèlement à la première direction générale D1 d'extension du balai 11 par exemple.

L'au moins une ouverture 131 est disposée dans la conduite d'amenée de liquide de nettoyage 13 de manière définir une direction de projection du liquide de nettoyage, schématisée par la flèche F2, formant un angle α (visible sur la figure 2C) compris entre 0° et 15°, de préférence inférieur ou égal à 10°, avec la deuxième direction générale D2. Selon le mode de réalisation de la figure 2B, l'angle α de projection du liquide de nettoyage par rapport à la deuxième direction générale D2 est nul. Selon le mode de réalisation de la figure 2C, l'angle α est non nul.

En effet, du fait du faible rayon de courbure de la surface de révolution 5, l'angle de projection α est choisi suffisamment faible pour permettre la projection du liquide de nettoyage sur la surface de révolution 5.

De plus, le liquide de nettoyage peut être projeté via l'ouverture ou les ouvertures 131 sur la surface de révolution 5 à proximité de la lame d'essuyage 111 afin que cette dernière balaye le liquide de nettoyage projeté peu de temps après cette projection. Ceci permet de limiter la perturbation du champ de vision de l'élément optique dans la zone dans laquelle intervient la projection de liquide de nettoyage.

En modulant l'angle α de projection du liquide de nettoyage sur la surface de révolution 5 en fonction de son rayon de courbure, il est possible de projeter efficacement le liquide de nettoyage afin de garantir un nettoyage efficace de la surface de révolution 5. L'angle α de projection de liquide de nettoyage sur la surface de révolution 5 peut par exemple être ajusté lors de l'installation de la conduite d'amenée de liquide de nettoyage 13 sur le balai 11 en pivotant cette conduite sur elle-même autour d'un axe central (non représenté) de la conduite d'amenée de liquide de nettoyage 13. L'axe central de la conduite de nettoyage 13 est parallèle à la première direction générale D1 du balai 11 dans l'exemple décrit ici.

Le nettoyage du dispositif de protection 3 peut donc être réalisé de manière efficace quel que soit le rayon de courbure de ce dernier lors du mouvement relatif de rotation entre le balai 11 et le dispositif de protection 3.

Selon un mode de réalisation particulier, la conduite d'amenée de liquide de nettoyage 13 peut être chauffante de manière à chauffer le liquide de nettoyage avant sa projection sur la surface de révolution 5 du dispositif de protection 3 afin de permettre par exemple un dégivrage de la surface de révolution 5.

D'autre part, comme cela est représenté en référence aux figures 2A à 2C, la conduite d'amenée de liquide de nettoyage 13 est fixée sur le balai 11 à l'opposé de la lame d'essuyage 111. Plus particulièrement, le talon 113 peut servir de support à la conduite d'amenée de liquide de nettoyage 13.

Par ailleurs, la conduite d'amenée de liquide de nettoyage 13 peut s'étendre longitudinalement et comporte une première extrémité 13a et une deuxième extrémité 13b. La deuxième extrémité 13b est opposée à la première extrémité 13a dans le sens longitudinal.

De plus, la conduite d'amenée de liquide de nettoyage 13 présente une arrivée 133 (figures 2A, 3 à 4C et 5A) configurée pour l'alimentation de la conduite d'amenée de liquide de nettoyage 13 en liquide de nettoyage.

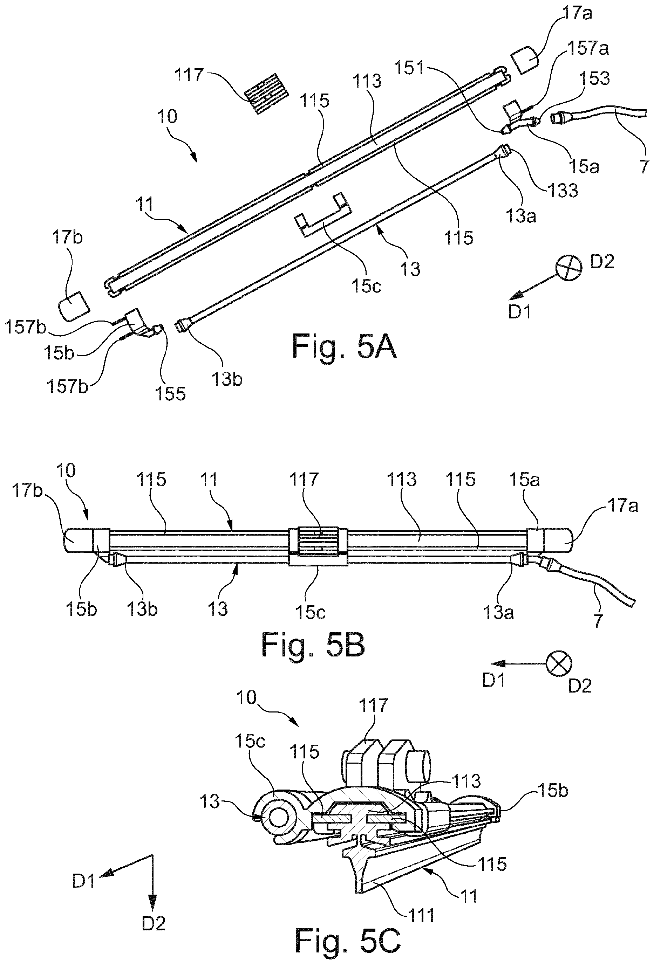

Selon le mode de réalisation particulier de la figure 2A, l'arrivée 133 peut être disposée à la première extrémité 13a de la conduite d'amenée de liquide de nettoyage 13 ou dans le prolongement de la première extrémité 13a. L'arrivée 133 peut être reliée directement à une conduite principale 7 (visible sur les figures 4A, 4B, 5A et 5B) configurée pour alimenter la conduite d'amenée de liquide de nettoyage 13 en liquide de nettoyage. Selon ce mode de réalisation particulier, la conduite d'amenée de liquide de nettoyage 13 présente une structure relativement simple.

En référence aux figures 2A, et 3 à 4B, les premier 17a et deuxième 17b capots d'extrémité peuvent coopérer respectivement avec la première 13a ou la deuxième 13b extrémité de la conduite d'amenée de liquide de nettoyage 13, comme cela est décrit plus en détail ultérieurement.

Selon une variante non représentée ici, l'arrivée 133 de la conduite d'amenée de liquide de nettoyage 13 disposée au niveau de la première extrémité 13a de la conduite d'amenée de liquide de nettoyage 13 peut coopérer avec le premier capot d'extrémité 17a. Dans ce cas, le premier capot d'extrémité 17a est configuré pour assurer la connexion entre l'arrivée 133 de la conduite d'amenée de liquide de nettoyage 13 et la conduite principale 7 destinée à alimenter la conduite d'amenée de liquide de nettoyage 13 en liquide de nettoyage. Le premier capot d'extrémité 17a présente donc des moyens de connexion avec la conduite principale 7.

En référence aux figures 2A, et 3 à 4B, le deuxième capot d'extrémité 17b coopère par exemple avec la deuxième extrémité 13b de la conduite d'amenée de liquide de nettoyage 13. Le deuxième capot d'extrémité 17b peut être prévu pour obturer une ouverture de la deuxième extrémité 13b de la conduite d'amenée de liquide de nettoyage 13. Afin de prévenir d'éventuelles fuites de liquide de nettoyage, le deuxième capot d'extrémité 17b présente avantageusement un dispositif d'étanchéité configuré pour coopérer avec la deuxième extrémité 13b de la conduite d'amenée de liquide de nettoyage 13.

Selon les modes de réalisation représentés en référence aux figures 2A, 3 à 4B, 5A et 5B, la conduite d'amenée de liquide de nettoyage 13 s'étend sensiblement sur l'ensemble du balai 11.

Selon une autre variante non représentée ici, la conduite d'amenée de liquide de nettoyage 13 peut s'étendre seulement sur une partie du balai 11. Selon cette autre variante, la deuxième extrémité 13b de la conduite d'amenée de liquide de nettoyage 13 est pleine afin de retenir le liquide de nettoyage à l'intérieur de cette conduite d'amenée de liquide de nettoyage 13.

En référence à la figure 3, il est représenté la conduite d'amenée de liquide de nettoyage 13 selon un mode de réalisation alternatif. Ce mode de réalisation alternatif diffère du mode de réalisation de la figure 2A par le fait que l'arrivée 133 de la conduite d'amenée de liquide de nettoyage 13 est disposée de manière décalée par rapport aux première 13a et deuxième 13b extrémités de la conduite d'amenée de liquide de nettoyage 13. Plus particulièrement, l'arrivée 133 est disposée au-dessus de la lame d'essuyage 111, selon la disposition des éléments sur la figure 3, et dans un plan P défini par les directions D1 et D2. L'arrivée 133 est disposée du côté du balai 11 opposé au côté destiné à être en regard de la surface de révolution 5 (non visible sur la figure 3). Ainsi, l'arrivée 133 de la conduite d'amenée de liquide de nettoyage 13 est cachée par la lame d'essuyage 111 et par le talon 113 et n'est donc pas présente dans le champ de vision de l'au moins un élément optique.

En référence aux figures 3 à 4B, le premier capot d'extrémité 17a peut coopérer par exemple avec la première extrémité 13a de la conduite d'amenée de liquide de nettoyage 13. Selon les modes de réalisation particuliers représentés sur ces figures, le premier capot d'extrémité 17a peut être prévu pour obturer une ouverture de la première extrémité 13a de la conduite d'amenée de liquide de nettoyage 13. Afin de prévenir d'éventuelles fuites de liquide de nettoyage, le premier capot d'extrémité 17a présente avantageusement un dispositif d'étanchéité configuré pour coopérer avec la première extrémité 13a de la conduite d'amenée de liquide de nettoyage 13.

Selon une variante de ce mode de réalisation alternatif non représentée ici, la conduite d'amenée de liquide de nettoyage 13 ne s'étend que sur une partie du balai 11. Selon cette variante, les première 13a et deuxième 13b extrémités de la conduite d'amenée de liquide de nettoyage 13 peuvent être pleines afin de prévenir toute fuite du liquide de nettoyage contenu dans cette conduite d'amenée de liquide de nettoyage 13. Cette variante permet, entre autre, de s'affranchir de l'utilisation de dispositifs d'étanchéité coopérant avec les première 13a et deuxième 13b extrémités de la conduite d'amenée de liquide de nettoyage 13, ce qui permet de simplifier la structure du module de nettoyage 10.

En référence aux figures 4A à 4C, il est représenté le module de nettoyage 10 selon un mode de réalisation particulier. Selon ce mode de réalisation particulier, le balai 11 présente deux vertèbres de rigidification 115 disposées de part et d'autre du balai 11, plus précisément du talon 113 de la lame d'essuyage 111, autrement dit prenant le talon 113 de la lame d'essuyage 111 en sandwich.

Comme cela est représenté en référence aux figures 4A et 4B, les premier 17a et deuxième 17b capots d'extrémité coopèrent également avec l'au moins une vertèbre de rigidification 115 ainsi qu'avec les première 13a et deuxième 13b extrémités de la conduite d'amenée de liquide de nettoyage 13.

On peut envisager selon ce mode de réalisation que l'arrivée 133 de la conduite d'amenée de liquide de nettoyage 13 est disposée de manière décalée par rapport aux première 13a et deuxième 13b extrémités de la conduite d'amenée de liquide de nettoyage 13. Par ailleurs, cette conduite d'amenée de liquide de nettoyage 13 est en connexion directe avec la conduite principale 7. Une telle configuration du module de nettoyage 10 est assez simple à fabriquer et à assembler, ce qui permet entre autre de limiter les coûts associés d'un système d'assistance à la conduite 1 (visible sur la figure 1) muni d'un tel module de nettoyage 10. Un tel agencement n'est pas limité au cas du balai 11 présentant des vertèbres de rigidification 115 et peut être adapté à d'autres modes de réalisation.

D'autre part, comme cela est représenté en référence à la figure 4C, l'arrivée 133 de la conduite d'amenée de liquide de nettoyage 13 est disposée sensiblement au-dessus de la première extrémité 13a de cette conduite d'amenée de liquide de nettoyage 13. Une telle configuration permet notamment de réduire la largeur du module de nettoyage 10 afin de limiter la perturbation des images capturées par l'au moins un élément optique.

En référence aux figures 4D et 4E, il est représenté deux variantes de la figure 4C. Afin de ne pas surcharger ces figures, la conduite d'amenée de liquide de nettoyage 13 est omise de ces figures. Ces figures 4D et 4E présentent deux modes de réalisation correspondant à la structure de la vertèbre de rigidification 115.

Selon une première variante, représentée en référence à la figure 4D, le balai 11 présente une seule vertèbre de rigidification 115 qui vient tenir le talon 113 de la lame d'essuyage 111. Cette vertèbre de rigidification 115 présente par exemple une coupe transversale en forme de C ou une forme de griffe, de manière à venir prendre en sandwich au moins une partie du talon 113. Ainsi, au moins une partie du talon 113 est logée à l'intérieur du C de la vertèbre de rigidification 115. Le talon 113 présente avantageusement une forme complémentaire à la vertèbre de rigidification 115. Par exemple, le talon 113 peut présenter des rainures afin de permettre la coopération entre le talon 113 et les extrémités du « C » de la vertèbre de rigidification 115.

Selon cette variante, l'élément de fixation 117 est disposé sur la vertèbre de rigidification 115. De plus, la vertèbre de rigidification 115, selon ce mode de réalisation particulier, peut servir de support à la conduite d'amenée de liquide de nettoyage 13.

Selon une autre variante représentée sur la figure 4E, le balai 11 présente une vertèbre de rigidification 115, par exemple sous la forme d'une lame, disposée sur le talon 113 de la lame d'essuyage 111. La vertèbre de rigidification 115 peut coopérer avec le talon 113 par collage par exemple.

Selon cette autre variante, la vertèbre de rigidification 115 peut également être disposée entre le talon 113 et l'élément de fixation 117.

Selon les différents modes de réalisation représentés en référence aux figures 4C à 4E, l'au moins une vertèbre de rigidification 115 peut s'étendre sur l'ensemble de la longueur du balai 11 ou seulement sur une partie de cette longueur.

En référence aux figures 5A à 5C, il est représenté le module de nettoyage 10 selon une variante du mode de réalisation particulier décrit en référence aux figures 4A à 4C. Selon cette variante, le module de nettoyage 10 comporte en outre au moins deux moyens d'encliquetage 15a, 15b pour la fixation de cette conduite d'amenée de liquide de nettoyage 13 au balai 11.

Selon cette variante, la conduite d'amenée de liquide de nettoyage 13 est reliée au balai par trois moyens d'encliquetage 15a, 15b, 15c. Ces moyens d'encliquetage 15a, 15b, 15c sont configurés pour prendre le balai 11, et plus particulièrement le talon 113 et l'au moins une vertèbre de rigidification 115 lorsqu'elle est prévue, en sandwich afin d'assurer la fixation de la conduite d'amenée de liquide de nettoyage 13 sur le balai 11.

Plus particulièrement, le module de nettoyage 10 présente au moins un premier 15a et un deuxième 15b moyens d'encliquetage. Ces premier 15a et deuxième 15b moyens d'encliquetage sont disposés aux extrémités de la conduite d'amenée de liquide de nettoyage 13 de manière à assurer sa coopération avec le balai 11.

Le premier moyen d'encliquetage 15a est disposé au niveau de l'arrivée 133 de la conduite d'amenée de liquide de nettoyage 13 et est configuré pour assurer la connexion entre l'arrivée 133 et la conduite principale 7 destinée à alimenter la conduite d'amenée de liquide de nettoyage 13 en liquide de nettoyage. A cet effet, le premier moyen d'encliquetage 15a présente un premier moyen de coopération 151 configuré pour assurer la connexion entre le premier moyen d'encliquetage 15a et l'arrivée 133 de la conduite d'amenée de liquide de nettoyage et un deuxième moyen de coopération 153 configuré pour assurer la connexion entre la premier moyen d'encliquetage 15a et la conduite principale 7.

D'autre part, le deuxième moyen d'encliquetage 15b est disposé au niveau de la deuxième extrémité 13b de la conduite d'amenée de liquide de nettoyage 13. Selon ce mode de réalisation particulier, le deuxième moyen d'encliquetage 15b présente un moyen de coopération 155 configuré pour coopérer avec la deuxième extrémité 13b de la conduite d'amenée de liquide de nettoyage 13, et plus particulièrement avec l'ouverture de la deuxième extrémité 13b de la conduite d'amenée de liquide de nettoyage 13. Le moyen de coopération 155 du deuxième moyen d'encliquetage 15b peut présenter un dispositif d'étanchéité configuré pour obturer l'ouverture de la deuxième extrémité 13b de la conduite d'amenée de liquide de nettoyage 13 afin de prévenir des fuites de liquide de nettoyage contenu dans la conduite d'amenée de liquide de nettoyage 13.

D'autre part, selon ce mode de réalisation particulier, les premier 15a et deuxième 15b moyens d'encliquetage présentent respectivement des premier 157a et deuxième 157b éléments de coopération configurés pour coopérer respectivement avec les premier 17a et deuxième 17b capots d'extrémité.

Par ailleurs, le module de nettoyage 10 peut comprendre en outre des moyens d'encliquetage additionnels 15c. Les moyens d'encliquetage additionnels 15c sont disposés sensiblement au centre de la conduite d'amenée de liquide de nettoyage 13 et permettent de renforcer la coopération de la conduite d'amenée de liquide de nettoyage 13 avec le balai 11.

Selon le mode de réalisation particulier représenté en référence aux figures 5A à 5C, les moyens d'encliquetage 15a, 15b, 15c sont rapportés à la conduite d'amenée de liquide de nettoyage 13. Selon une variante non représentée ici, les moyens d'encliquetage 15a, 15b, 15c peuvent venir de matière avec la conduite d'amenée de liquide de nettoyage 13.

En revenant sur la figure 1, le système d'assistance à la conduite 1 peut comporter, de manière optionnelle, une rigole de récupération 8 de liquide de nettoyage configurée pour recueillir le liquide de nettoyage ruisselant de la surface de révolution 5. Cette rigole de récupération 8 est par exemple disposée au contact de l'élément de carrosserie dont le dispositif de protection 3 fait saillie. Par ailleurs, il est possible de prévoir un système de recirculation (non représenté) du liquide de nettoyage en direction de l'arrivée 133 de la conduite d'amenée de liquide de nettoyage 13 afin de permettre un recyclage du liquide de nettoyage ainsi récupéré. Ce système de recirculation peut notamment comprendre un dispositif de filtration configuré pour retenir des particules solides éventuellement présentes dans le liquide de nettoyage au cours de sa recirculation.

De plus, selon le mode de réalisation de la figure 1, l'au moins un actionneur 9 est configuré pour générer un mouvement relatif de rotation entre le dispositif de protection 3 et le balai 11 du module de nettoyage 10 autour de l'axe de révolution A du dispositif de protection 3, comme cela est représenté par la flèche F1 des figures 2B et 2C. L'au moins un actionneur 9 peut notamment être choisi parmi les actionneurs pneumatiques, électriques, ou encore magnétiques. Par ailleurs, selon le mode de réalisation particulier de la figure 1, l'au moins un actionneur 9 est configuré pour déplacer le balai 11 relativement au dispositif de protection 3 à une vitesse comprise entre 5 et 30 tours/minute. En effet, la vitesse de déplacement relatif du balai 11 par rapport au dispositif de protection 3 ne doit pas être trop lente pour limiter la perturbation des images capturées par l'au moins un élément optique ou encore la perturbation des émissions de signaux optiques dans le cas d'une technologie Lidar. Cependant, cette vitesse de rotation ne doit pas être trop élevée pour prévenir une déformation éventuelle de la lame d'essuyage 111, pour éviter que cette dernière ne se retourne, ou encore pour éviter une fatigue prématurée de cette dernière voire une rupture entre la lame d'essuyage 111 et le talon 113.

Selon un mode de réalisation particulier du système d'assistance à la conduite 1, le dispositif de protection 3 est configuré pour être monté fixe sur le véhicule automobile et le balai 11 est configuré pour être monté mobile par rapport au dispositif de protection 3. Selon ce mode de réalisation particulier, l'actionneur 9 est donc configuré pour entraîner le balai 11 en mouvement. Plus particulièrement, l'actionneur 9 est configuré, selon ce mode de réalisation particulier, pour déplacer le bras auquel est attaché le balai 11 via l'élément de fixation 117 en rotation autour de l'axe de révolution A du dispositif de protection 3.

Selon une alternative du système d'assistance à la conduite 1, le balai 11 est configuré pour être monté fixe sur le véhicule automobile et le dispositif de protection 3 est configuré pour être monté mobile par rapport au balai 11. Selon cette alternative, l'actionneur 9 est configuré pour entraîner le dispositif de protection 3 en rotation sur lui-même autour de son axe de révolution A.

Selon encore une autre variante, le dispositif de protection 3 peut être mobile en rotation autour de l'axe de révolution A dans une première direction et le balai 11 peut être monté mobile en rotation autour de l'axe de révolution A dans une deuxième direction opposée à la première direction. Selon cette variante, le système d'assistance à la conduite 1 comprend deux actionneurs 9, l'un étant configuré pour assurer le mouvement dans la première direction et l'autre étant configuré pour assurer le mouvement dans la deuxième direction.

Le système d'assistance à la conduite 1 (représenté en référence à la figure 1) peut comporter en outre une unité électronique de contrôle (non représentée ici). L'unité électronique de contrôle est configurée pour déclencher un procédé de nettoyage 100 du dispositif de protection 3. L'unité électronique de contrôle peut être reliée à l'au moins un élément optique, éventuellement configuré pour permettre la détection de salissures sur l'au moins un dispositif de protection 3.

### Procédé de nettoyage 100 du dispositif de protection 3 :

En référence à la figure 6, il est représenté de façon schématique un diagramme présentant les différentes étapes mises en œuvre lors du procédé de nettoyage 100 du dispositif de protection 3 mettant en œuvre un module de nettoyage 10 tel que décrit précédemment en référence aux figures 1 à5C.

Le procédé de nettoyage 100 du dispositif de protection 3 comprend au moins une étape d'alimentation E1 de la conduite d'amenée de liquide de nettoyage 13 (figures 2A à 4C et 5A à 5C) en liquide de nettoyage suivie d'une étape de projection E2 de liquide de nettoyage sur la surface de révolution 5 du dispositif de protection 3 (figure 1) et une étape de balayage E3 de la surface de révolution 5 lors d'un mouvement relatif entre le balai 11 du module de nettoyage 10 et le dispositif de protection 3.

Selon un mode de réalisation particulier, l'unité électronique de contrôle peut être configurée pour piloter l'arrivée 133 de la conduite d'amenée de liquide de nettoyage 13 afin de commander le débit du liquide de nettoyage à l'intérieur de la conduite d'amenée de liquide de nettoyage 13 lors de l'étape d'alimentation E1 de la conduite d'amenée de liquide de nettoyage 13.

De manière optionnelle, le procédé de nettoyage 100 du dispositif de protection 3 peut comprendre une étape de détection E0 de la présence de salissures sur la surface de révolution 5 du dispositif de protection 3. Cette étape de détection E0 est mise en œuvre préalablement à l'étape d'alimentation E1. Dans le cas d'une détection de salissures sur la surface de révolution 5 du dispositif de protection 3, l'unité électronique de contrôle peut être configurée pour déclencher le procédé de nettoyage 100 du dispositif de protection 3 lorsque la présence de salissures sur celui-ci est détectée par l'élément optique. Selon une alternative, l'unité électronique de contrôle peut être configurée pour déclencher le procédé de nettoyage 100 du dispositif de protection 3 au bout d'une durée prédéterminée d'utilisation du système d'assistance à la conduite 1. Selon cette alternative, l'étape de détection E0 n'est pas nécessaire.

D'autre part, et également de manière optionnelle, le procédé de nettoyage 100 du dispositif de protection 3 peut comprendre une étape d'arrêt E4 de la projection de liquide de nettoyage pour permettre la détection de salissures éventuellement encore présentes sur le dispositif de protection 3. Au cours de cette étape d'arrêt E4 de la projection de liquide, l'étape de balayage E3 peut être maintenue de manière à ce que la lame d'essuyage 111 essuie la surface de révolution 5 du dispositif de protection 3 afin notamment d'éliminer des traces résiduelles de liquide de nettoyage éventuellement présentes sur cette surface de révolution 5. La mise en œuvre de cette étape d'arrêt E4 de la projection de liquide permet entre autre de sécher la surface de révolution 5 du dispositif de protection 3 de manière à ce que le système d'assistance à la conduite 1 retrouve une bonne opérabilité rapidement après un nettoyage du dispositif de protection 3.

Par ailleurs, et toujours de manière optionnelle, le procédé de nettoyage 100 du dispositif de protection 3 peut comprendre une étape de pause E4' dans laquelle le mouvement relatif de rotation du balai 11 par rapport au dispositif de protection 3 et la projection de liquide de nettoyage sont stoppés afin de permettre la détection de la présence de salissures éventuelles sur le dispositif de protection 3.

Afin de limiter la gêne occasionnée par le nettoyage du dispositif de protection 3, l'unité électronique de contrôle peut être configurée de manière à ce que le procédé de nettoyage 100, et plus particulièrement la mise en œuvre des étapes de projection E2 et de balayage E3, présente une durée inférieure à 2 minutes, et de préférence inférieure à 50 secondes.

De plus, comme cela est représenté en référence aux figures 2B et 2C, la conduite d'amenée de liquide de nettoyage 13 est disposée sur le balai 11 de manière à projeter du liquide de nettoyage sur la surface de révolution 5 préalablement au passage de la lame d'essuyage 111 lors de l'étape de balayage E3. Ainsi, le liquide de nettoyage est essuyé peu de temps après sa projection sur la surface de révolution 5 ce qui permet de limiter la perturbation du système d'assistance à la conduite 1 lors de la mise en œuvre du procédé de nettoyage 100 du dispositif de protection 3. La vitesse de rotation peut être adaptée, et plus particulièrement réduite, entre deux passages successifs du balai 11 de manière à ce que le liquide de nettoyage ait par exemple plus de temps pour humidifier les salissures dans la cas où certaines salissures seraient encore détectées après un nettoyage 100 du dispositif de protection 3.

D'autre part, le procédé de nettoyage 100 du dispositif de protection 3 peut être déclenché par l'unité électronique de contrôle lorsque le véhicule automobile est à l'arrêt ou en mouvement.

Les exemples particuliers décrits ci-dessus sont donnés à titre illustratif et non limitatif. En effet, il est tout à fait possible pour l'homme de l'art de disposer l'élément de fixation 117 à d'autres endroits du balai 11 sans sortir du cadre de la présente invention. De plus, l'homme de l'art pourra adapter le positionnement de l'arrivée 133 de la conduite d'amenée de liquide de nettoyage 13, la coopération de celle-ci avec le balai 11, ou encore la connexion entre l'arrivée 133 de cette conduite et la conduite principale 7 sans sortir du cadre de la présente invention.

Ainsi, le module de nettoyage 10 tel que décrit précédemment permet un nettoyage efficace d'un dispositif de protection 3 d'un élément optique d'un système d'assistance à la conduite 1, présentant une surface de révolution 5 avec un faible rayon de courbure. Plus particulièrement, c'est le balayage de la surface de révolution 5 par la lame d'essuyage 111 en complément de la projection de liquide de nettoyage sur cette surface de révolution 5 avec un faible angle de projection a, qui permet d'assurer ce nettoyage efficace du dispositif de protection 3. De plus, la disposition de la conduite d'amenée de liquide de nettoyage 13 permet de projeter le liquide de nettoyage au plus proche de la lame d'essuyage 111 ce qui permet entre autre de limiter la perturbation du système d'assistance à la conduite 1 au cours du nettoyage 100 du dispositif de protection 3.

## Revendications

1. Module de nettoyage (10) d'un dispositif de protection (3) d'un élément optique, notamment destiné à équiper un véhicule automobile, le dispositif de protection (3) présentant une surface de révolution (5) autour d'un axe de révolution (A), le module de nettoyage (10) comprenant un balai (11) configuré pour s'étendre selon une première direction générale (D1) parallèle à l'axe de révolution (A) du dispositif de protection (3), le balai (11) comportant une lame d'essuyage (111) configurée pour s'étendre depuis le balai (11) vers la surface de révolution (5) selon une deuxième direction générale (D2) perpendiculaire à la première direction générale (D1) d'extension du balai (11), la lame d'essuyage (111) étant configurée pour balayer la surface de révolution (5) du dispositif de protection (3) lors d'un mouvement relatif de rotation entre le balai (11) et le dispositif de protection (3) autour de l'axe de révolution (A), **caractérisé en ce que**
• le module de nettoyage (10) comporte en outre une conduite d'amenée de liquide de nettoyage (13) fixée sur le balai (11), ladite conduite d'amenée de liquide de nettoyage (13) présentant au moins une ouverture (131) pour la projection de liquide de nettoyage, disposée de manière à définir une direction de projection du liquide de nettoyage formant un angle (α) compris entre 0° et 15° avec la deuxième direction générale (D2).

2. Module de nettoyage (10) selon la revendication précédente, **caractérisé en ce que** la conduite d'amenée de liquide de nettoyage (13) est fixée sur le balai (11) à l'opposé de la lame d'essuyage (111).

3. Module de nettoyage (10) selon l'une quelconque des revendications précédentes, **caractérisé en ce que** le balai (11) présente en outre au moins une vertèbre de rigidification (115) s'étendant selon la première direction générale (D1), ladite vertèbre de rigidification (115) étant disposée sur le balai (11) à l'opposé de la lame d'essuyage (111).

4. Module de nettoyage (10) selon l'une quelconque des revendications précédentes, **caractérisé en ce qu'**il comporte au moins deux moyens d'encliquetage (15a, 15b) configurés pour relier la conduite d'amenée de liquide de nettoyage (13) au balai (11).

5. Module de nettoyage (10) selon l'une quelconque des revendications précédentes, **caractérisé en ce qu'**il comprend en outre un premier (17a) et un deuxième (17b) capots d'extrémité disposés aux extrémités longitudinales du balai (11).

6. Module de nettoyage (10) selon l'une quelconque des revendications 1 à 5, **caractérisé en ce que** la conduite d'amenée de liquide de nettoyage (13) présente une arrivée (133) pour l'alimentation de la conduite d'amenée de liquide de nettoyage (13) en liquide de nettoyage disposée à une première extrémité (13a) de la conduite d'amenée de liquide de nettoyage (13).

7. Module de nettoyage (10) selon les revendications 5 et 6, **caractérisé en ce que** l'arrivée (133) de la conduite d'amenée de liquide de nettoyage (13) coopère avec le premier capot d'extrémité (17a), le premier capot d'extrémité (17a) étant configuré pour assurer la connexion entre l'arrivée (133) de la conduite d'amenée de liquide de nettoyage (13) et une conduite principale (7) destinée à alimenter la conduite d'amenée de liquide de nettoyage (13) en liquide de nettoyage.

8. Module de nettoyage (10) selon l'une quelconque des revendications 1 à 5, **caractérisé en ce que** la conduite d'amenée de liquide de nettoyage (13) présente une arrivée (133) pour l'alimentation de la conduite d'amenée de liquide de nettoyage (13) en liquide de nettoyage, ladite arrivée (133) étant disposée de manière décalée par rapport aux première (13a) et deuxième (13b) extrémités de la conduite d'amenée de liquide de nettoyage (13).

9. Module de nettoyage (10) selon l'une des revendications 6 ou 8, **caractérisé en ce que** l'arrivée (133) de la conduite d'amenée de liquide de nettoyage (13) est reliée directement à une conduite principale (7) configurée pour alimenter la conduite d'amenée de liquide de nettoyage (13) en liquide de nettoyage.

10. Module de nettoyage (10) selon la revendication selon la revendication 4, prise en combinaison avec l'une quelconque des revendications 6 ou 8, **caractérisé en ce que** :
• ledit module (10) comporte au moins un premier (15a) et un deuxième (15b) moyens d'encliquetage disposés aux extrémités de la conduite d'amenée de liquide de nettoyage (13), et **en ce que**
• le premier moyen d'encliquetage (15a) est disposé au niveau de l'arrivée (133) de la conduite d'amenée de liquide de nettoyage (13) et configuré pour assurer la connexion entre l'arrivée (133) et une conduite principale (7) destinée à alimenter la conduite d'amenée de liquide de nettoyage (13) en liquide de nettoyage.

11. Système d'assistance à la conduite (1), notamment pour véhicule automobile, comprenant au moins un élément optique, et au moins un dispositif de protection (3) dudit au moins un élément optique présentant une surface de révolution (5) autour d'un axe de révolution (A), **caractérisé en ce qu'**il comporte en outre :
• un module de nettoyage (10) dudit au moins un dispositif de protection (3) selon l'une quelconque des revendications précédentes, et
• au moins un actionneur (9) configuré pour générer le mouvement relatif de rotation entre le dispositif de protection (3) et le balai (11) du module de nettoyage (10) autour de l'axe de révolution (A) du dispositif de protection (3).

12. Système d'assistance à la conduite (1) selon la revendication 11, **caractérisé en ce que** le dispositif de protection (3) est configuré pour être monté fixe sur le véhicule automobile et le balai (11) est configuré pour être monté mobile par rapport au dispositif de protection (3).

13. Système d'assistance à la conduite (1) selon la revendication 11, **caractérisé en ce que** le balai (11) est configuré pour être monté fixe sur le véhicule automobile et le dispositif de protection (3) est configuré pour être monté mobile par rapport au balai (11).

14. Système d'assistance à la conduite (1) selon l'une quelconque des revendications 11 à 13, **caractérisé en ce qu'**il comprend en outre une unité électronique de contrôle configurée pour commander le nettoyage du dispositif de protection (3) par le module de nettoyage (10).

## Patentansprüche

1. Reinigungsmodul (10) einer Schutzvorrichtung (3) eines optischen Elements, welches insbesondere zur Ausrüstung eines Kraftfahrzeugs bestimmt ist, wobei die Schutzvorrichtung (3) eine Rotationsfläche (5) um eine Rotationsachse (A) aufweist, wobei das Reinigungsmodul (10) ein Wischblatt (11) umfasst, das dafür ausgelegt ist, sich in einer ersten allgemeinen Richtung (D1) zu erstrecken, die zur Rotationsachse (A) der Schutzvorrichtung (3) parallel ist, wobei das Wischblatt (11) einen Wischgummi (111) umfasst, der so gestaltet ist, dass er sich von dem Wischblatt (11) zur Rotationsfläche (5) hin in einer zweiten allgemeinen Richtung (D2) erstreckt, die zu der ersten allgemeinen Richtung (D1) der Erstreckung des Wischblattes (11) senkrecht ist,
wobei der Wischgummi (111) dafür ausgelegt ist, die Rotationsfläche (5) der Schutzvorrichtung (3) während einer relativen Drehbewegung zwischen dem Wischblatt (11) und der Schutzvorrichtung (3) um die Rotationsachse (A) zu wischen,
**dadurch gekennzeichnet, dass**
das Reinigungsmodul (10) außerdem eine Zuführungsleitung für Reinigungsflüssigkeit (13) umfasst, die am Wischblatt (11) befestigt ist, wobei die Zuführungsleitung für Reinigungsflüssigkeit (13) wenigstens eine Öffnung (131) zum Spritzen von Reinigungsflüssigkeit aufweist, die derart angeordnet ist, dass sie eine Spritzrichtung der Reinigungsflüssigkeit definiert, die mit der zweiten allgemeinen Richtung (D2) einen Winkel (α) zwischen 0° und 15° bildet.

2. Reinigungsmodul (10) nach dem vorhergehenden Anspruch, **dadurch gekennzeichnet, dass** die Zuführungsleitung für Reinigungsflüssigkeit (13) gegenüber dem Wischgummi (111) am Wischblatt (11) befestigt ist.

3. Reinigungsmodul (10) nach einem der vorhergehenden Ansprüche, **dadurch gekennzeichnet, dass** das Wischblatt (11) außerdem wenigstens eine Versteifungsleiste (115) aufweist, die sich in der ersten allgemeinen Richtung (D1) erstreckt, wobei die Versteifungsleiste (115) am Wischblatt (11) gegenüber dem Wischgummi (111) angeordnet ist.

4. Reinigungsmodul (10) nach einem der vorhergehenden Ansprüche, **dadurch gekennzeichnet, dass** es wenigstens zwei Rastmittel (15a, 15b) umfasst, die dafür ausgelegt sind, die Zuführungsleitung für Reinigungsflüssigkeit (13) mit dem Wischblatt (11) zu verbinden.

5. Reinigungsmodul (10) nach einem der vorhergehenden Ansprüche, **dadurch gekennzeichnet, dass** es außerdem eine erste (17a) und eine zweite (17b) Endkappe umfasst, die an den Längsenden des Wischblattes (11) angeordnet sind.

6. Reinigungsmodul (10) nach einem der Ansprüche 1 bis 5, **dadurch gekennzeichnet, dass** die Zuführungsleitung für Reinigungsflüssigkeit (13) ein Eintrittsstück (133) zur Versorgung der Zuführungsleitung für Reinigungsflüssigkeit (13) mit Reinigungsflüssigkeit aufweist, das an einem ersten Ende (13a) der Zuführungsleitung für Reinigungsflüssigkeit (13) angeordnet ist.

7. Reinigungsmodul (10) nach den Ansprüchen 5 und 6, **dadurch gekennzeichnet, dass** das Eintrittsstück (133) der Zuführungsleitung für Reinigungsflüssigkeit (13) mit der ersten Endkappe (17a) zusammenwirkt, wobei die erste Endkappe (17a) dafür ausgelegt ist, die Verbindung zwischen dem Eintrittsstück (133) der Zuführungsleitung für Reinigungsflüssigkeit (13) und einer Hauptleitung (7) sicherzustellen, die dazu bestimmt ist, die Zuführungsleitung für Reinigungsflüssigkeit (13) mit Reinigungsflüssigkeit zu versorgen.

8. Reinigungsmodul (10) nach einem der Ansprüche 1 bis 5, **dadurch gekennzeichnet, dass** die Zuführungsleitung für Reinigungsflüssigkeit (13) ein Eintrittsstück (133) zur Versorgung der Zuführungsleitung für Reinigungsflüssigkeit (13) mit Reinigungsflüssigkeit aufweist, wobei das Eintrittsstück (133) in Bezug auf das erste (13a) und zweite (13b) Ende der Zuführungsleitung für Reinigungsflüssigkeit (13) versetzt angeordnet ist.

9. Reinigungsmodul (10) nach einem der Ansprüche 6 oder 8, **dadurch gekennzeichnet, dass** das Eintrittsstück (133) der Zuführungsleitung für Reinigungsflüssigkeit (13) direkt mit einer Hauptleitung (7) verbunden ist, die dafür ausgelegt ist, die Zuführungsleitung für Reinigungsflüssigkeit (13) mit Reinigungsflüssigkeit zu versorgen.

10. Reinigungsmodul (10) nach Anspruch 4 in Kombination mit einem der Ansprüche 6 oder 8, **dadurch gekennzeichnet, dass**:
• das Modul (10) wenigstens ein erstes (15a) und ein zweites (15b) Rastmittel aufweist, die an den Enden der Zuführungsleitung für Reinigungsflüssigkeit (13) angeordnet sind, und dadurch, dass
• das erste Rastmittel (15a) am Eintrittsstück (133) der Zuführungsleitung für Reinigungsflüssigkeit (13) angeordnet ist und dafür ausgelegt ist, die Verbindung zwischen dem Eintrittsstück (133) und einer Hauptleitung (7) sicherzustellen, die dazu bestimmt ist, die Zuführungsleitung für Reinigungsflüssigkeit (13) mit Reinigungsflüssigkeit zu versorgen.

11. Fahrerassistenzsystem (1), insbesondere für ein Kraftfahrzeug, welches wenigstens ein optisches Element und wenigstens eine Schutzvorrichtung (3) des wenigstens einen optischen Elements, die eine Rotationsfläche (5) um eine Rotationsachse (A) aufweist, umfasst, **dadurch gekennzeichnet, dass** es außerdem umfasst:
• ein Reinigungsmodul (10) der wenigstens einen Schutzvorrichtung (3) nach einem der vorhergehenden Ansprüche, und
• wenigstens einen Stellantrieb (9), der dafür ausgelegt ist, die relative Drehbewegung zwischen der Schutzvorrichtung (3) und dem Wischblatt (11) des Reinigungsmoduls (10) um die Rotationsachse (A) der Schutzvorrichtung (3) zu erzeugen.

12. Fahrerassistenzsystem (1) nach Anspruch 11, **dadurch gekennzeichnet, dass** die Schutzvorrichtung (3) dafür ausgelegt ist, fest an dem Kraftfahrzeug angebracht zu werden, und das Wischblatt (11) dafür ausgelegt ist, beweglich in Bezug auf die Schutzvorrichtung (3) angebracht zu werden.

13. Fahrerassistenzsystem (1) nach Anspruch 11, **dadurch gekennzeichnet, dass** das Wischblatt (11) dafür ausgelegt ist, dafür ausgelegt ist, fest an dem Kraftfahrzeug angebracht zu werden, und die Schutzvorrichtung (3) dafür ausgelegt ist, beweglich in Bezug auf das Wischblatt (11) angebracht zu werden.

14. Fahrerassistenzsystem (1) nach einem der Ansprüche 11 bis 13, **dadurch gekennzeichnet, dass** es außerdem eine elektronische Steuereinheit umfasst, die dafür ausgelegt ist, die Reinigung der Schutzvorrichtung (3) durch das Reinigungsmodul (10) zu steuern.

## Claims

1. A module (10) for cleaning a protection device (3) of an optical element, in particular intended to equip a motor vehicle, the protection device (3) having a surface of revolution (5) around an axis of revolution (A), the cleaning module (10) including a wiper blade (11) configured to extend in a first general direction (D1) parallel to the axis of revolution (A) of the protection device (3), the wiper blade (11) including a wiper rubber (111) configured to extend from the wiper blade (11) toward the surface of revolution (5) in a second general direction (D2) perpendicular to the first general direction (D1) of extension of the wiper blade (11),
• the wiper rubber (111) being configured to wipe the surface of revolution (5) of the protection device (3) during relative movement of rotation between the wiper blade (11) and the protection device (3) about the revolution axis (A), **characterized in that**
• the cleaning module (10) further includes a cleaning liquid feed pipe (13) fixed to the wiper blade (11), said cleaning liquid feed pipe (13) including at least one opening (131) for spraying cleaning liquid disposed in such a manner as to define a direction of spraying the cleaning liquid forming an angle (α) between 0° and 15° inclusive with the second general direction (D2).

2. Cleaning module (10) according to the preceding claim, **characterized in that** the cleaning liquid feed pipe (13) is fixed to the wiper blade (11) on the side opposite the wiper rubber (111).

3. Cleaning module (10) according to either one of the preceding claims, **characterized in that** the wiper blade (11) further includes at least one stiffener spine (115) extending in the first general direction (D1), said stiffener spine (115) being disposed on the wiper blade (11) on the side opposite the wiper rubber (111).

4. Cleaning module (10) according to any one of the preceding claims, **characterized in that** it includes at least two clipping means (15a, 15b) configured to connect the cleaning liquid feed pipe (13) to the wiper blade (11).

5. Cleaning module (10) according to any one of the preceding claims, **characterized in that** it further includes a first end cap (17a) and a second end cap (17b) disposed at the longitudinal ends of the wiper blade (11).

6. Cleaning module (10) according to any one of Claims 1 to 5, **characterized in that** the cleaning liquid feed pipe (13) includes an inlet (133) for supplying the cleaning liquid feed pipe (13) with cleaning liquid disposed at a first end (13a) of the cleaning liquid feed pipe (13).

7. Cleaning module (10) according to Claims 5 and 6, **characterized in that** the inlet (133) of the cleaning liquid feed pipe (13) cooperates with the first end cap (17a), the first end cap (17a) being configured to make the connection between the inlet (133) of the cleaning liquid feed pipe (13) and a main pipe (7) intended to supply the cleaning liquid feed pipe (13) with cleaning liquid.

8. Cleaning module (10) according to any one of Claims 1 to 5, **characterized in that** the cleaning liquid feed pipe (13) includes an inlet (133) for feeding the cleaning liquid feed pipe (13) with cleaning liquid, said inlet (133) being disposed in an offset manner relative to the first end (13a) and the second end (13b) of the cleaning liquid feed pipe (13).

9. Cleaning module (10) according to either one of Claims 6 or 8, **characterized in that** the inlet (133) of the cleaning liquid feed pipe (13) is connected directly to a main pipe (7) configured to supply the cleaning liquid feed pipe (13) with cleaning liquid.

10. Cleaning module (10) according to Claim 4 in combination with either one of Claims 6 or 8, **characterized in that**:
• said module (10) includes at least one first clipping means (15a) and one second clipping means (15b) disposed at the ends of the cleaning liquid feed pipe (13), and **in that**
• the first clipping means (15a) is disposed at the inlet (133) of the cleaning liquid feed pipe (13) and configured to make the connection between the inlet (133) and a main pipe (7) intended to supply the cleaning liquid feed pipe (13) with cleaning liquid.

11. Driving assistance system (1), in particular for a motor vehicle, including at least one optical element and at least one device (3) for protection of said at least one optical element having a surface of revolution (5) about an axis of revolution (A), **characterized in that** it further includes:
• at least one module (10) according to any one of the preceding claims for cleaning said at least one protection device (3), and
• at least one actuator (9) configured to generate the relative movement of rotation between the protection device (3) and the wiper blade (11) of the cleaning module (10) about the axis of revolution (A) of the protection device (3).

12. Driving assistance system (1) according to Claim 11, **characterized in that** the protection device (3) is configured to be mounted on and fixed to the motor vehicle and the wiper blade (11) is configured to be mounted to be mobile relative to the protection device (3).

13. Driving assistance system (1) according to Claim 11, **characterized in that** the wiper blade (11) is configured to be mounted on and fixed to the motor vehicle and the protection device (3) is configured to be mounted to be mobile relative to the wiper blade (11).

14. Driving assistance system (1) according to any one of Claims 11 to 13, **characterized in that** it further includes an electronic control unit configured to control the cleaning of the protection device (3) by the cleaning module (10).
